# EUROPEAN PATENT APPLICATION

(11) **EP 4 787 956 A1**
(43) Date of publication of application: **05.08.2026**
(21) Application number: 23953821.8
(22) Date of filing: 28.09.2023
(51) Int. Cl.: H04W 36/00

(54) **TIMER PROCESSING METHOD AND APPARATUS**

(71) Applicant: 1FINITY INC., Kawasaki-shi, Kanagawa 211-8588 (JP)
(72) Inventor: JIA, Meiyi, Beijing 100022 (CN); HAN, Chao, Beijing 100022 (CN); GENG, Tingting, Beijing 100022 (CN)
(74) Representative: Haseltine Lake Kempner LLP
(86) International application number: PCT/CN2023/122989
(87) International publication number: WO 2025/065677

(57) **Abstract**

Embodiments of the present disclosure provide a processing method and apparatus for a timer, the method comprising: when a first timer is not running, a terminal equipment performs at least one of the following processing: fast recovery; random access-based cell switch; transmitting the first uplink data by using a dynamic grant; or starting or restarting the first timer; wherein the first timer is a configured grant timer or a time alignment timer. According to the embodiments of the present disclosure, a terminal equipment may continue to transmit the first uplink data when a first timer is not running, thus ensuring successful completion of LTM cell switch or completion of LTM execution.

## Description

### TECHNICAL FIELD

Embodiments of the present disclosure relate to the technical field of communications.

### BACKGROUND

A Physical Uplink Shared Channel (PUSCH) may be scheduled by Downlink Control Information (DCI) on a Physical Downlink Control Channel (PDCCH), and a network device schedules initial transmission of each uplink transmission by using an uplink grant on a DCI. Or, a PUSCH may provide a configured grant (CG) via Radio Resource Control (RRC). Currently, the following two types of operation are supported:
Type-2: the first PUSCH is triggered by a DCI, with subsequent PUSCH transmissions following an RRC configuration and scheduling received on the DCI; and
Type-1: the PUSCH is triggered by data arrival to transmit buffer of a terminal equipment, and the PUSCH transmissions follow an RRC configuration.

For an operation with shared spectrum channel access, a terminal equipment may perform retransmissions on a CG. To handle potential listen before talk (LBT) failures on a CG, a CG retransmission timer may be configured to enable autonomous retransmissions. When a CG retransmission timer is configured, a terminal equipment will select a Hybrid Automatic Repeat-reQuest (HARQ) process for each CG resource by itself.

For scheduling at cell level, a Configured Scheduling RNTI (CS-RNTI) is a unique terminal equipment identification used for Semi-Persistent Scheduling (SPS) in the downlink or CG in the uplink.

For a given Bandwidth Part (BWP) of a serving cell, a terminal equipment may be configured with up to 12 active CGs. When more than one CGs are configured, a network side decides which (including all) CGs are active at a time. For Type-2, each CG is activated separately using a DCI command, and a DCI command may be used to deactivate a single or multiple CGs.

When a Supplementary Uplink (SUL) is configured, a network side needs to ensure that an active CG on the SUL does not overlap in time with another active CG on the other UL configuration.

For both dynamic grant (DG) and CG Type-2, the number of repetitions may also be dynamically indicated in L1 signaling. If the number of repetitions also presents in RRC, the dynamically indicated number of repetitions overrides the RRC configured number of repetitions.

To improve New Radio (NR) uplink coverage, enhanced aggregation of multiple slots with Transport Block (TB) repetition is supported for both PUSCH transmission with dynamic and configured grant.

It should be noted that the above introduction to the technical background is just to facilitate a clear and complete description of technical solutions of the present disclosure, and is elaborated to facilitate understanding of persons skilled in the art. It cannot be considered that the technical solutions are known by persons skilled in the art just because these solutions are elaborated in Background of the present disclosure.

### SUMMARY

Inventor finds that in an L1/L2-triggered mobility (LTM) procedure, a network device decides to perform cell switch to a target cell and transmit an MAC CE triggering cell switch and including a candidate configuration index of a target cell. A terminal equipment switches to a target cell and applies a configuration indicated by a candidate configuration index. In addition, a terminal equipment further transmits the first uplink data (also called the first UL data) in a target cell, such as an RRC reconfiguration complete message, and if a random access procedure is not performed, i.e., for RACH-less LTM, when a terminal equipment determines that a network side has successfully received the first uplink data thereof, a terminal equipment considers that LTM execution is completed. Moreover, a terminal equipment determines successful reception of the first uplink data thereof by receiving a newly-transmitted PDCCH that is addressed by a C-RNTI of a terminal equipment in a target cell and is after scheduling transmission of the first uplink data.

According to current discussions, a dynamic grant or a configured grant may be used for transmission of the first uplink data of a terminal equipment in a target cell during an LTM procedure. In a case of a dynamic grant, it is assumed that a source Distributed Unit (DU) informs a target DU of a selected beam, so that a target DU starts to dynamically schedule a UL grant; and in a case of a configured grant, a terminal equipment selects an occasion of a configured grant associated with a beam indicated in an LTM MAC CE.

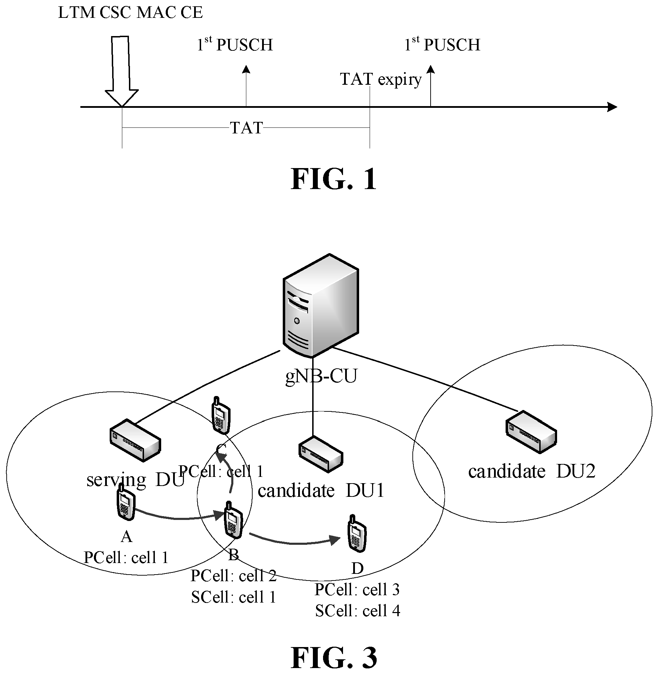

However, for RACH-less LTM, there exists the following problems:
Problem 1: in a case where a terminal equipment transmits the first uplink data by using a configured grant, if a terminal equipment has not yet successfully completed LTM execution or LTM cell switch when a corresponding CG timer expires, the terminal equipment will be unable to continue transmitting the first uplink data, thus is not able to complete LTM execution or LTM cell switch, which increases interruption of service between a terminal equipment and a network.
Problem 2: during an LTM procedure, when an LTM cell switch command (MAC CE) including a Timing Advance Command (TAC) is received, a terminal equipment applies the TAC for an indicated Primary Timing Advance Group (PTAG) of a LTM target cell, and starts or restarts a TA timer (TAT) associated with the PTAG. According to an existing mechanism, if the TAT is not running, the terminal equipment is not able to perform any uplink transmission except a random access preamble and a message A (MSGA) transmission. This means that if a terminal equipment has not yet successfully completed LTM execution or LTM cell switch when the TAT expires, as shown in FIG. 1, the terminal equipment is unable to continue transmitting the first uplink data, thus is not able to complete LTM execution or LTM cell switch, which increases interruption of service between a terminal equipment and a network.

For at least one of the above problems or other similar problem(s), the embodiments of the present disclosure provide a processing method and apparatus for a timer, so that a terminal equipment is able to continue transmitting the first uplink data and/or continue performing a cell switch procedure when a CG timer or a TA timer (TAT) is not running, thereby to ensure successful completion of LTM cell switch or completion of LTM execution, or so that a terminal equipment is able to perform fast recovery when a CG timer or a TA timer (TAT) is not running, thereby reducing interruption of service.

According to an aspect of the embodiments of the present disclosure, a processing apparatus for a timer is provided, configured in a terminal equipment, wherein the apparatus includes:
a first processing unit configured to perform at least one of the following processing when a first timer is not running:
fast recovery;
random access-based cell switch;
transmitting the first uplink data by using a dynamic grant; or
starting or restarting the first timer;
wherein the first timer is a configured grant timer or a time alignment timer.

One of advantageous effects of the embodiments of the present disclosure is that: according to the embodiments of the present disclosure, when a first timer is not running, a terminal equipment performs at least one of (1) fast recovery, (2) random access-based cell switch, (3) transmitting the first uplink data by using a dynamic grant or (4) starting or restarting the first timer, thereby the terminal equipment may continue transmitting the first uplink data and/or continue performing a cell switch procedure when a first timer is not running, thereby to ensure successful completion of LTM cell switch or completion of LTM execution, or so that a terminal equipment is able to perform fast recovery when a CG timer or a TA timer (TAT) is not running, thereby reducing interruption of service.

Referring to later descriptions and drawings, specific implementations of the present disclosure are disclosed in detail, indicating a mode in which a principle of the present disclosure may be adopted. It should be understood that implementations of the present disclosure are not limited in terms of a scope. Within a scope of a spirit and terms of the attached claims, implementations of the present disclosure include many changes, modifications and equivalents.

Features described and/or shown for one implementation may be used in the same way or in a similar way in one or more other implementations, and may be combined with or replace features in other implementations.

It should be emphasized that the term "include/contain" when being used herein refers to presence of a feature, a whole piece, a step, or a component, but does not exclude presence or addition of one or more other features, whole pieces, steps, or components.

### BRIEF DESCRIPTION OF DRAWINGS

An element and a feature described in one drawing or one implementation of the embodiments of the present disclosure may be combined with an element and a feature shown in one or more other drawings or implementations. In addition, in the drawings, similar labels denote corresponding components in several drawings and may be used to indicate corresponding components used in more than one implementation.
FIG. 1 is a schematic diagram in which a UE is not able to transmit the first uplink data in a target cell in a case where a TAT expires;
FIG. 2 is a schematic diagram of an LTM procedure;
FIG. 3 is a schematic diagram of an L1/L2-based inter-cell mobility scenario;
FIG. 4 is a schematic diagram of an Intra-AMF/UPF handover scenario (i.e., an L3 handover scenario);
FIG. 5 is a schematic diagram of an Intra-AMF/UPF conditional handover scenario (i.e., a CHO scenario);
FIG. 6 is a schematic diagram of a processing method for a timer in the embodiments of the present disclosure;
FIG. 7 is a schematic diagram of a processing apparatus for a timer in the embodiments of the present disclosure;
FIG. 8 is a schematic diagram of a communication system in the embodiments of the present disclosure;
FIG. 9 is a schematic diagram of a terminal equipment in the embodiments of the present disclosure.

### DETAILED DESCRIPTION

Referring to the drawings, through the following Specification, the aforementioned and other features in the present disclosure will become obvious. The Specification and the drawings specifically disclose specific implementations of the present disclosure, indicating partial implementations for which a principle of the present disclosure may be adopted. It should be understood that the present disclosure is not limited to described implementations, on the contrary, the present disclosure includes all modifications, variations and equivalents falling within the scope of the attached claims.

In the embodiments of the present disclosure, the terms "first" and "second", etc. are used to distinguish different elements in terms of appellation, but do not represent a spatial arrangement or time sequence, etc. of these elements, and these elements should not be limited by these terms. The term "and/or" includes any one of and all combinations of one or more of listed associated terms. The terms "contain", "include" and "have", etc. refer to presence of stated feature(s), element(s), component(s), or assembly/assemblies, but do not exclude presence or addition of one or more other features, elements, components, or assemblies.

In the embodiments of the present disclosure, the singular forms "a/an" and "the", etc. include plural forms, and should be understood broadly as "a kind of" or "a type of", but are not defined as the meaning of "one", in addition, the term "the" should be understood to include both singular forms and plural forms, unless otherwise explicitly indicated in the context. In addition, the term "according to" should be understood as "at least partially according to......", and the term "based on" should be understood as "at least partially based on......", unless otherwise explicitly indicated in the context.

In the embodiments of the present disclosure, the term "communication network" or "radio communication network" may refer to a network meeting any of the following communication standards, such as Long Term Evolution (LTE), LTE-Advanced (LTE-A), Wideband Code Division Multiple Access (WCDMA), High-Speed Packet Access (HSPA) and so on.

And, communication between devices in a communication system may be carried out according to a communication protocol of any stage, for example may include but be not limited to the following communication protocols: 1G (generation), 2G, 2.5G, 2.75G, 3G, 4G, 4.5G, 5G, New Radio (NR) and so on, and/or other communication protocols that are currently known or will be developed in the future.

In the embodiments of the present disclosure, the term "network device" e.g. refers to a device accessing a terminal equipment to a communication network in a communication system and providing services to the terminal equipment. A network device may include but be not limited to the following devices: a Base Station (BS), an Access Point (AP), a Transmission Reception Point (TRP), a broadcast transmitter, a Mobile Management Entity (MME), a gateway, a server, a Radio Network Controller (RNC), a Base Station Controller (BSC) and so on.

A base station may include but be not limited to: a node B (NodeB or NB), an evolution node B (eNodeB or eNB) and a 5G BS (gNB), etc., and may further includes a Remote Radio Head (RRH), a Remote Radio Unit (RRU), a relay or low power node (such as femeto, pico, etc.), an Integrated Access and Backhaul (IAB) node or an IAB-DU or IAB-donor. And the term " base station " may include some or all functions thereof, each base station may provide communication coverage to a specific geographic region. The term "cell" may refer to a base station and/or a coverage area thereof, which depends on a context in which this term is used. Without causing confusion, the terms "cell" and " base station " are interchangeable.

In the embodiments of the present disclosure, the term "User Equipment (UE)" or "Terminal Equipment (TE) or Terminal Device" e.g. refers to a device accessing a communication network and receiving network services via a network device. A TE may be fixed or mobile, and may also be called a Mobile Station (MS), a terminal, a Subscriber Station (SS), an Access Terminal (AT), an IAB-MT (Mobile Terminal), a station and so on.

A terminal equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a digital camera and so on.

For another example, under a scenario such as Internet of Things (IoT), a terminal equipment may further be a machine or apparatus for monitoring or measurement, for example may include but be not limited to: a Machine Type Communication (MTC) terminal, a vehicle-mounted communication terminal, a Device to Device (D2D) terminal, a Machine to Machine (M2M) terminal and so on.

Moreover, the term "network side" or "network device side" refers to a side of a network, may be a certain base station, or may include one or more network devices as mentioned above. The term "user side" or "terminal side" or "a terminal equipment side" refers to a side of a user or terminal, may be a certain UE, or may include one or more terminal equipments as mentioned above. Unless otherwise indicated herein, "device" may refer to a network device, or may refer to a terminal equipment.

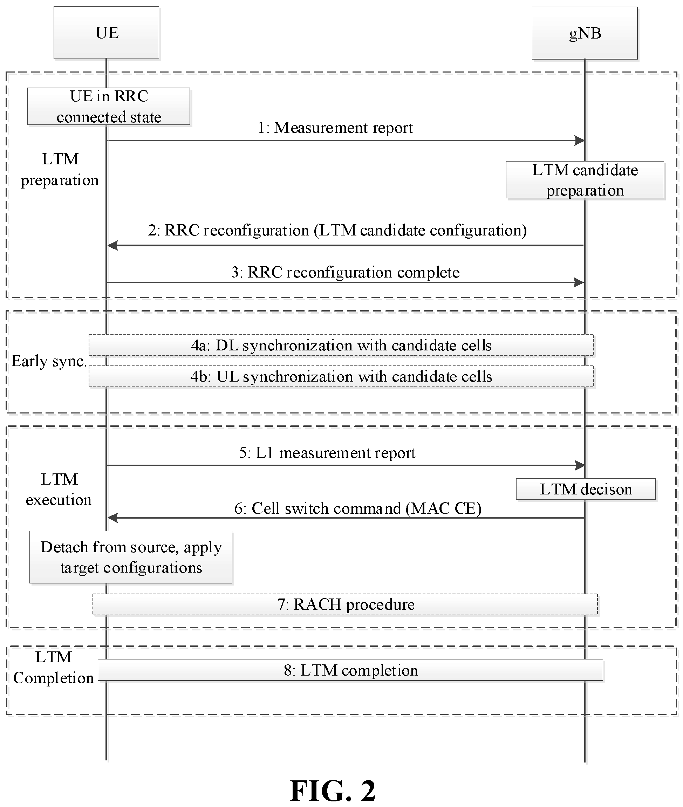

FIG. 2 is a schematic diagram of an LTM procedure. As shown in FIG. 2, the procedure includes the following steps:
1. A UE transmits a measurement report (*MeasurementReport*) message to a gNB, in which a gNB-CU decides to use LTM and initiates candidate cell preparation.
2. The gNB transmits an RRC reconfiguration (*RRCReconfiguration*) message to the UE, including an LTM candidate cell configuration for one or more candidate cells.
3. The UE stores the LTM candidate cell configuration and transmits an RRC reconfiguration complete (*RRCReconfigurationComplete*) message to the gNB.
4a/4b. Before receiving a cell switch command, the UE may perform downlink (simply called DL) synchronization and Timing Advance (TA) acquisition for a candidate cell.
5. The UE performs L1 measurement on a configured candidate cell and transmits a lower-layer measurement report to the gNB.
   Note: a sequence of DL/uplink (simply called UL) synchronization and L1 measurement has not been defined yet and may be altered.
6. The gNB decides to execute cell switch to a target cell and transmits an MAC Control Element (MAC CE) to trigger a cell switch LTM command via including a candidate configuration index of a target cell. The UE switches to a configuration of the target cell.
7. If a cell switch includes performing a random access procedure, the UE performs a random access procedure to a target cell.
8. The UE indicates completion of cell switch to a target cell.

The UE may perform steps 4 to 8 multiple times based on a configuration provided in step 2 for subsequent LTM cell switch.

FIG. 3 is a schematic diagram of an inter-cell mobility scenario in the embodiments of the present disclosure.

As shown in FIG. 3, in the embodiments of the present disclosure, when a terminal equipment moves from a coverage area of one cell to a coverage area of another cell, a serving cell switch needs to be performed at a certain point. Scenarios supported by inter-cell mobility include: an inter-gNB scenario, an Inter-DU scenario, an Intra-DU scenario, a handover scenario, a CA scenario, an NR-DC scenario, and an inter-frequency scenario, etc.

In a handover scenario, handover refers to mobility/change of a PCell, involving a non-CA scenario (i.e., PCell only) and a CA scenario (i.e., PCell and SCell(s)), including:
a target PCell/target SCell(s) is not a current serving cell (i.e., a CA→CA scenario with PCell change), such as cell switch from B to D in a scenario shown in FIG. 3,
a target PCell is a current SCell, such as cell switch from B to C in a scenario shown in FIG. 3, and
a target SCell is a current PCell, such as cell switch from A to B in a scenario shown in FIG. 3.

In a CA scenario, PCell change without SCell change and PCell change with SCell change are supported.

In an NR-DC scenario, PSCell change (i.e., intra-SN) without involving a Mobile Network (MN) is supported.

In an inter-frequency scenario, an inter-frequency scenario includes mobility to an inter-frequency cell that is not a current serving cell, and if feasible, inter-frequency L1 measurement is supported.

In each of the above scenarios, a source cell and a target cell may be synchronous or asynchronous, and may operate on FR1 or FR2.

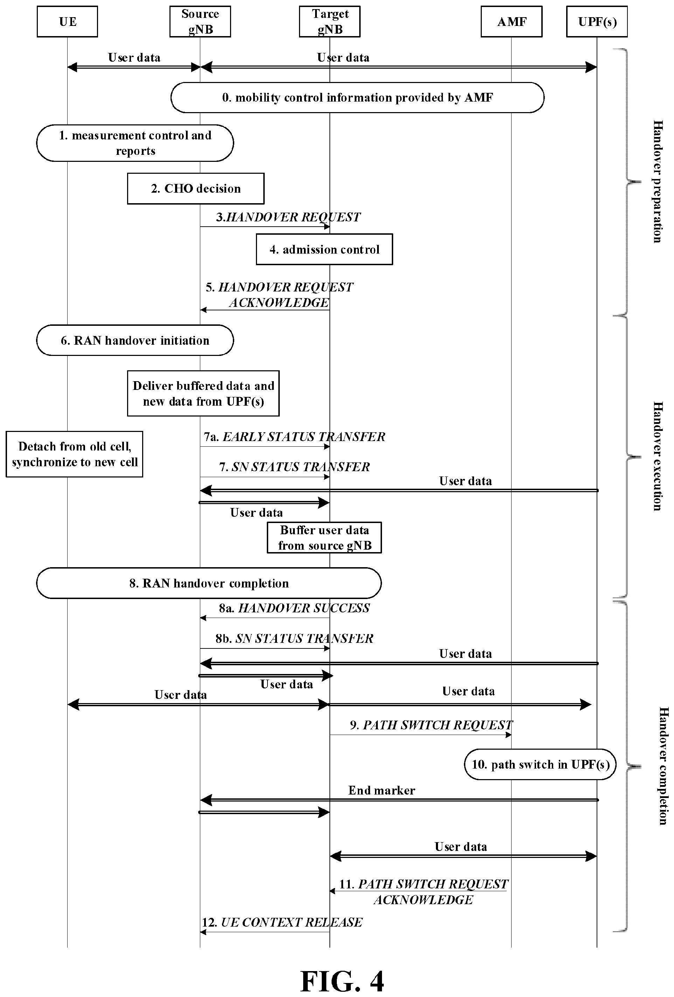

FIG. 4 is a schematic diagram of an Intra-AMF/UPF handover scenario (i.e., an L3 handover scenario). As shown in FIG. 4, under this scenario, the following steps are included:
0. A UE context within a source gNB contains information regarding roaming and access restrictions, which were provided at connection establishment or at the last TA update.
1. The source gNB configures UE measurement procedures, and UE reports according to a measurement configuration.
2. The source gNB decides to handover a UE based on a measurement report and RRM information.
3. The source gNB issues a handover request message to a target gNB passing a transparent RRC container with necessary information to prepare the handover at a target side. The source gNB may also request a DAPS handover for one or more DRBs.
4. Admission control may be performed by the target gNB.
5. The target gNB prepares the handover with L1/L2 and sends HANDOVER REQUEST ACKNOWLEDGE to the source gNB, which includes a transparent container to be transmitted to a UE as an RRC message to perform the handover. The target gNB also indicates if a DAPS handover is accepted.
   Note: as soon as the source gNB receives HANDOVER REQUEST ACKNOWLEDGE, or as soon as transmission of a handover command is initiated in a downlink, data forwarding may be initiated.
6. The source gNB triggers Uu handover by sending an RRCReconfiguration message to the UE.
7. For DRBs not configured with a DAPS, the source gNB sends an SN STATUS TRANSFER message to the target gNB to convey an uplink PDCP SN receiver status and a downlink PDCP SN transmitter status of a DRB for which PDCP status preservation applies (i.e., RLC AM). The uplink PDCP SN receiver status includes at least a PDCP SN of a first missing UL PDCP SDU and may include a bitmap of a receive status of out of sequence UL PDCP SDUs that the UE needs to retransmit in a target cell, if any. The downlink PDCP SN transmitter status indicates a next PDCP SN that the target gNB shall assign to new PDCP SDUs, not having a PDCP SN yet.
8. The UE synchronizes to a target cell and completes an RRC handover procedure by sending an RRCReconfigurationComplete message to the target gNB. In case of DAPS handover, the UE does not detach from a source cell upon receiving an RRCReconfiguration message. The UE releases source resources and configurations and stops DL/UL reception/transmission with a source upon receiving an explicit release from a target node.
9. The target gNB sends a PATH SWITCH REQUEST message to an AMF to trigger 5GC to switch a DL data path towards the target gNB and to establish an NG-C interface instance towards the target gNB.
10. 5GC switches a DL data path towards the target gNB. A UPF transmits one or more "end marker" packets on an old path to the source gNB per PDU session/tunnel, and then may release all U-plane/TNL resources towards the source gNB.
11. An AMF confirms a PATH SWITCH REQUEST message with a PATH SWITCH REQUEST ACKNOWLEDGE message.
12. Upon reception of a PATH SWITCH REQUEST ACKNOWLEDGE message from an AMF, the target gNB sends UE CONTEXT RELEASE to inform the source gNB about the success of the handover. Then the source gNB may release radio and C-plane-related resources associated to the UE context. Any ongoing data forwarding may continue.

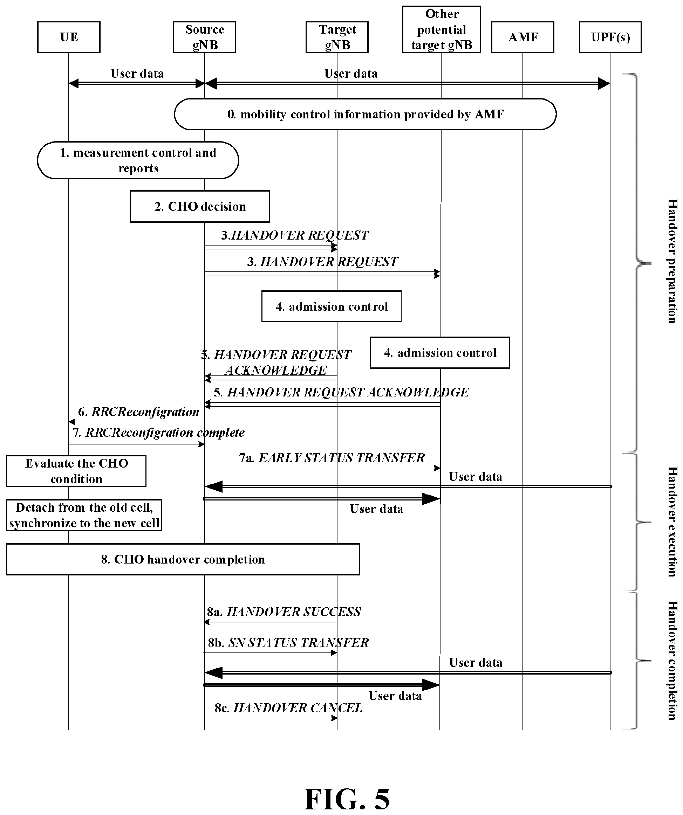

FIG. 5 is a schematic diagram of an Intra-AMF/UPF conditional handover scenario (i.e., a CHO scenario). As shown in FIG. 5, under this scenario, the following steps are included:
0. A UE context within a source gNB contains information regarding roaming and access restrictions which were provided either at connection establishment or at a last TA update.
1. A source gNB configures UE measurement procedures and UE reports according to a measurement configuration.
2. The source gNB decides to use CHO.
3. The source gNB requests CHO for one or more candidate cells belonging to one or more candidate gNBs. A CHO request message is transmitted for each candidate cell.
4. Admission control may be performed by a target gNB. If slice information is transmitted to the target gNB, slice-aware admission control shall be performed. If a PDU session is associated with a non-supported slice, the target gNB shall reject such PDU session.
5. A candidate gNB transmits a CHO response (HO REQUEST ACKNOWLEDGE) including a configuration of a CHO candidate cell to the source gNB. A CHO response message is transmitted for each candidate cell.
6. The source gNB transmits an RRCReconfiguration message to the UE, containing a configuration of a CHO candidate cell and a CHO execution condition.

A CHO configuration of a candidate cell can be followed by another reconfiguration from the source gNB.

7. The UE transmits an RRCReconfigurationComplete message to the source gNB.

7a. If early data forwarding is applied, the source gNB transmits an EARLY STATUS TRANSFER message.

8. The UE maintains a connection with the source gNB after receiving a CHO configuration, and starts evaluating a CHO execution condition for a candidate cell. If at least one CHO candidate cell satisfies corresponding CHO execution condition, the UE detaches from the source gNB, applies a stored corresponding configuration for the selected candidate cell, synchronizes to the candidate cell, and completes an RRC switch procedure by sending an RRCReconfigurationComplete message to the target gNB.

8a. The target gNB transmits a HANDOVER SUCCESS message to the source gNB to inform that the UE has successfully accessed a target cell.

8b. The source gNB transmits an SN STATUS TRANSFER message.

8c. The source gNB transmits a HANDOVER CANCEL message towards other signaling connections or other candidate target gNBs (if any) to cancel CHO for the UE.

Embodiments of the present disclosure are described below in conjunction with the drawings and specific implementations. In the following description, without causing confusion, "if...", "in a case where..." and "when..." may be used interchangeably.

### Embodiments of a First Aspect

Embodiments of the present disclosure provide a processing method for a timer, which is described from a terminal equipment side.

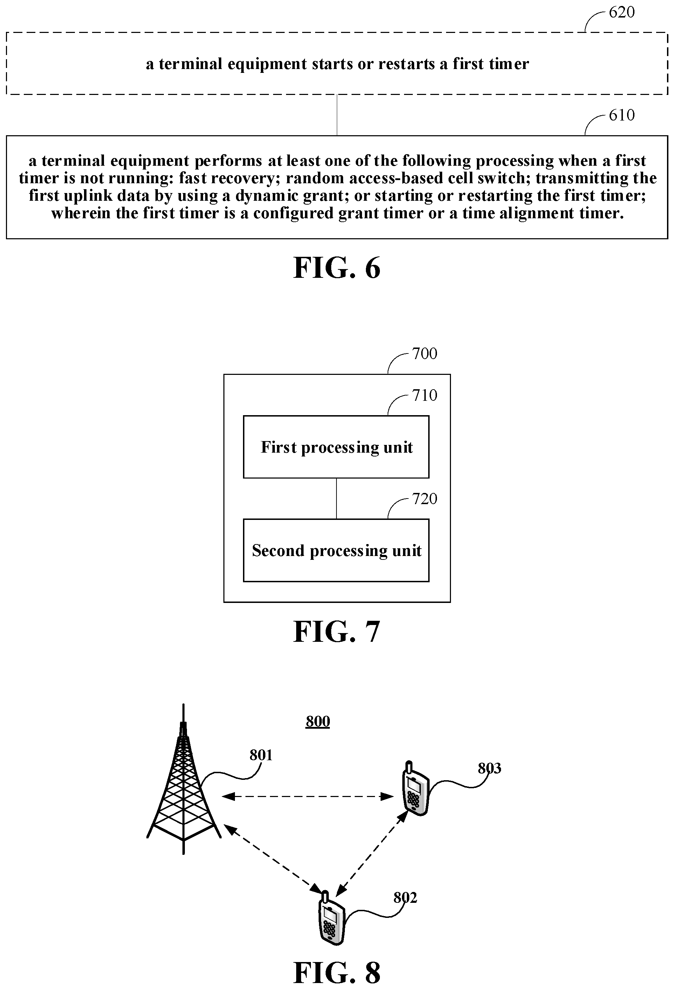

FIG. 6 is a schematic diagram of a processing method for a timer in the embodiments of the present disclosure, as shown in FIG. 6, the method includes:
610: a terminal equipment performs at least one of the following processing when a first timer is not running:
fast recovery;
random access-based cell switch;
transmitting the first uplink data by using a dynamic grant; or
starting or restarting the first timer;
wherein the first timer is a configured grant timer (*configuredGrantTimer*) or a time alignment timer (*timeAlignmentTimer*).

It is worth noting that the above FIG. 6 only schematically describes the embodiments of the present disclosure, however the present disclosure is not limited thereto. For example, some other operations may be increased or certain operations therein may be reduced. Persons skilled in the art may make appropriate modifications according to the above contents, not being limited to records in the above FIG. 6.

In the above embodiments, when a first timer is not running, a terminal equipment performs at least one of (1) fast recovery, (2) random access-based cell switch, (3) transmitting the first uplink data by using a dynamic grant or (4) starting or restarting the first timer, thereby the terminal equipment may continue transmitting the first uplink data and/or continue performing a cell switch procedure when a first timer is not running, thereby to ensure successful completion of LTM cell switch or completion of LTM execution, or so that a terminal equipment is able to perform fast recovery when a CG timer or a TA timer (TAT) is not running, thereby reducing interruption of service.

In the embodiments of the present disclosure, that a first timer is not running refers to at least one of the following:
that a first timer is configured, and the first timer expires,
that a first timer is configured, and the first timer is stopped, or
that a first timer is not configured.

In some embodiments, that a terminal equipment performs fast recovery includes that a terminal equipment initiates RRC connection reestablishment.

For example, a terminal equipment performs cell selection. If a first condition is satisfied, i.e., a selected cell is a conditional handover (CHO) candidate cell and a network configured "try CHO after failure", a terminal equipment attempts CHO execution once, or a terminal equipment applies a configuration of the CHO candidate cell; if a second condition is satisfied, i.e., if a selected cell is an L1/L2-triggered mobility (LTM) candidate cell and a network configured "try LTM after failure", a terminal equipment attempts LTM to the candidate cell once, or a terminal equipment applies a configuration of the LTM candidate cell, and if a first condition and/or a second condition is/are not satisfied, a terminal equipment transmits an RRC connection reestablishment request.

In the above example, that a first condition is not satisfied refers to that a selected cell is not a CHO candidate cell and a network does not configure "try CHO after failure". That is, if a selected cell is not a CHO candidate cell and a network does not configure "try CHO after failure", a terminal equipment transmits an RRC connection reestablishment request.

In the above example, that a second condition is not satisfied refers to that a selected cell is not an LTM candidate cell and a network does not configure "try LTM after failure". That is, if a selected cell is not an LTM candidate cell and a network does not configure "try LTM after failure", a terminal equipment transmits an RRC connection reestablishment request.

In the above example, that a first condition and a second condition are not satisfied refers to that a selected cell is neither a CHO candidate cell nor an LTM candidate cell and a network does not configure "try CHO and LTM after failure". That is, if a selected cell is neither a CHO candidate cell nor an LTM candidate cell and a network does not configure "try CHO and LTM after failure", a terminal equipment transmits an RRC connection reestablishment request.

For another example, a terminal equipment performs cell selection. If a first condition is satisfied, i.e., a selected cell is a conditional handover (CHO) candidate cell and a network configured "try CHO after failure", a terminal equipment attempts CHO execution once, or a terminal equipment applies a configuration of the CHO candidate cell, otherwise a terminal equipment transmits an RRC connection reestablishment request.

For a further example, a terminal equipment performs cell selection. If a second condition is satisfied, i.e., if a selected cell is an L1/L2-triggered mobility (LTM) candidate cell and a network configured "try LTM after failure", a terminal equipment attempts LTM to the candidate cell once, or a terminal equipment applies a configuration of the LTM candidate cell, otherwise a terminal equipment transmits an RRC connection reestablishment request.

In the above embodiments, an MAC layer/entity of a terminal equipment may indicate an upper layer that a first timer expires or is stopped, or indicate cell switch failure, or indicate radio link failure, or indicate execution of failure recovery, and/or, a terminal equipment may consider that a cell switch timer expires. Thus, compared to existing mechanisms, a behavior of a terminal equipment reuses existing mechanisms as much as possible, thereby reducing complexity of a terminal equipment and lowering cost of a terminal equipment. Cell switch timer here e.g. is T304. As for a meaning of T304, relevant technologies may be referred to, and a description thereof is omitted here.

According to the above embodiments, when a first timer is not running, a terminal equipment initiates RRC connection reestablishment. Thus, the terminal equipment is able to perform fast recovery, thereby reducing interruption of service.

In some embodiments, that a terminal equipment performs random access-based cell switch may include an MAC layer of a terminal equipment performs a random access procedure to a target cell.

For example, a terminal equipment transmits a random access preamble associated with a beam by using a random access resource associated with the beam which is a beam configured by RRC, a beam indicated by a lower layer (e.g., an MAC layer, the present disclosure is not limited thereto) or a selected beam, so as to perform a random access procedure to a target cell.

In the above embodiments, the beam configured by RRC/the beam indicated by a lower layer/the selected beam e.g. is an SSB, a TRS, or a CSI-RS, the present disclosure is not limited thereto.

For example, the beam configured by RRC is SSBs in *candidateBeamRSList* / *rach-ConfigDedicated*, or CSI-RSs in *candidateBeamRSList* / *rach-ConfigDedicated*, etc.

For another example, the beam indicated by a lower layer is a beam corresponding to a TCI state index indicated by an LTM cell switch command MAC CE.

For a further example, the selected beam is an SSB for which SS-RSRP is greater than a configured threshold or an CSI-RS for which CSI-RSRP is greater than a configured threshold, selected by a UE.

In the above embodiments, a random access procedure may be either a contention-based random access procedure or a contention-free random access procedure.

In the above embodiments, an MAC layer of a terminal equipment may further place the first uplink data from a HARQ process (a second HARQ process) corresponding to a first timer into a multiplexing and assembly entity, indicate to an upper layer that a first timer expires or is stopped, or indicate cell switch failure (RACH-less), or indicate radio link failure, or indicate execution of failure recovery, and/or a terminal equipment may consider that a cell switch timer expires. In this way, on the basis of indicating or considering that a cell switch timer expires, a terminal equipment may perform corresponding operations, provide a lower layer with a configuration required for a random access procedure, thereby ensuring that when a first timer is not running, a terminal equipment is able to perform a random access procedure to a target cell. Cell switch timer here e.g. is T304. As for a meaning of T304, relevant technologies may be referred to, and a description thereof is omitted here.

In the above embodiments, an RRC layer of a terminal equipment may further indicate to an MAC layer to perform a random access procedure to a target cell and deliver a CCCH message or a first RRC message to a lower layer, thereby triggering an MAC layer to perform a random access procedure to a target cell. In this way, a terminal equipment is able to reuse an existing random access initiation procedure as much as possible, thereby reducing complexity of a terminal equipment and lowering cost of a terminal equipment.

According to the above embodiments, when a first timer is not running, a terminal equipment performs random access-based cell switch. Thus, a terminal equipment may perform a random access procedure to a target cell, thereby completing LTM execution or completing LTM cell switch and continuing to transmit the first uplink data.

In some embodiments, that a terminal equipment transmits the first uplink data by using a dynamic grant includes that:
a terminal equipment monitors a PDCCH on an active BWP of a target cell, and
determines a corresponding HARQ process (called a first HARQ process) if an uplink grant on a PDCCH addressed to an MAC entity's C-RNTI is received, the HARQ process obtaining MAC PDUs from a multiplexing and assembly entity.

In the above embodiments, a terminal equipment may place the first uplink data from a buffer of a HARQ process (an original HARQ process, i.e., a HARQ process corresponding to the first uplink data transmission when a first timer is not running, called a second HARQ process) corresponding to a first timer (*configuredGrantTimer*) into a multiplexing and assembly entity. Thus, a first HARQ process may obtain MAC PDUs of the first uplink data from the multiplexing and assembly entity, thereby completing transmission of the first uplink data.

Optionally, in the above embodiments, a terminal equipment (e.g., an RRC layer of a terminal equipment) may further redeliver a first RRC message, such as an RRC reconfiguration complete message (CCCH message), to a lower layer (e.g., PDCP/RLC/MAC). Thus, when determining the first HARQ process by monitoring a PDCCH on an active BWP of a target cell, a terminal equipment may obtain, from a multiplexing and assembly entity, MAC PDUs including a first RRC message as the first uplink data for transmission, thereby completing transmission of the first uplink data.

In the above examples, an MAC layer of a terminal equipment may further indicate to an upper layer that a first timer (*configuredGrantTimer*) expires, thereby triggering a terminal equipment to deliver the first RRC message to a lower layer.

According to the above embodiments, when a configured grant timer (*configuredGrantTimer*) is not running, a terminal equipment transmits the first uplink data by using a dynamic grant. Thus, the terminal equipment may continue transmitting the first uplink data in a target cell, thereby completing LTM execution or completing LTM cell switch.

In some embodiments, a first timer is a configured grant timer (*configuredGrantTimer*), that a terminal equipment starts or restarts a first timer includes at least one of the following:
restarting the first timer,
monitoring a PDCCH on an active BWP of a target cell; and if an uplink grant (i.e., DG retransmission) on a PDCCH addressed to an MAC entity's CS-RNTI is received, starting or restarting the first timer, or
monitoring a PDCCH on an active BWP of a target cell; and if an uplink grant (i.e., DG retransmission) on a PDCCH addressed to an MAC entity's CS-RNTI is received, and if a CG retransmission timer (e.g., *cg-LTM-RetransmissionTimer*) is not configured, starting or restarting the first timer.

In the above embodiments, a terminal equipment may perform retransmission of the first uplink data by using the uplink grant.

In some other embodiments, a first timer is a time alignment timer (*timeAlignmentTimer*), that a terminal equipment starts or restarts a first timer includes:
restarting the first timer.

In the above embodiments, when cell switch is completed or it is considered that the first uplink data is successfully received, the first timer is stopped or it is considered that the first timer expires or is stopped. Thus, a transmission error or inconsistence between a terminal and a network caused by continuous running of a first timer is avoided.

According to the above embodiments, when a first timer is not running, a terminal equipment starts or restarts the first timer. Thus, a terminal equipment may continue transmitting the first uplink data during running of the first timer, thereby completing LTM execution or completing LTM cell switch.

In previous embodiments, processing of a terminal equipment when a first timer is not running is described, and in other embodiments, it may also be that a terminal equipment performs at least one of the above processing (i.e., (1) fast recovery, (2) random access-based cell switch, (3) transmitting the first uplink data by using a dynamic grant, or (4) starting or restarting the first timer) when a first timer is not running and a certain condition (called a third condition) is satisfied.

In the above embodiments, a third condition includes at least one of the following:
cell switch is ongoing,
the first uplink data (transmission) is transmitted,
it is not yet considered that the first uplink data (transmission) is successfully received,
downlink assignment on a PDCCH addressed to an MAC entity's C-RNTI has not yet been received, or
an uplink grant on a PDCCH addressed to an MAC entity's C-RNTI delivered to an HARQ entity of a HARQ process (the second HARQ process) corresponding to a first timer has not yet been received.

In the above embodiments, that the cell switch is ongoing, for example refers to that LTM or HO or CHO is ongoing, etc. may be that T304 is ongoing. As for a definition of T304, relevant technologies may be referred to.

In the above embodiments, that it is considered that the first uplink data (transmission) is successfully received includes that a downlink assignment on a PDCCH addressed to an MAC entity's C-RNTI is received, or that an uplink grant on a PDCCH addressed to an MAC entity's C-RNTI delivered to an HARQ entity of a HARQ process (the second HARQ process) corresponding to a first timer is received.

In the above embodiments, the first timer is a configured grant timer. The present disclosure is not limited thereto, the first timer may further be a time alignment timer.

According to the above embodiments, when a first timer is not running, a terminal equipment continues to determine whether the third condition is satisfied, and in a case where a third condition is also satisfied, a terminal equipment performs at least one of the above four processing, thereby transmitting the first uplink data and/or continuing to perform a cell switch procedure to complete LTM execution or complete LTM cell switch, or a terminal equipment is able to perform fast recovery when a CG timer or a TA timer (TAT) is not running, thereby reducing interruption of service.

In some embodiments, as shown in FIG. 6, the method further includes:
620: a terminal equipment starts or restarts a first timer.

In the above embodiments, if the first timer is a configured grant timer (*configuredGrantTimer*), a terminal equipment may start or restart the first timer in the following situations, the situations including but not limited to at least one of the following:
when performing transmission, if LBT failure indication is not received from lower layers, starting or restarting a first timer for a corresponding HARQ process,
when an uplink grant has been received on a PDCCH for an MAC entity's C-RNTI, and an identified HARQ process is configured for a configured uplink grant, starting or restarting a first timer for a corresponding HARQ process, or
when an uplink grant for a PDCCH occasion has been received on a PDCCH for an MAC entity's CS-RNTI, and NDI in received HARQ information is 1, starting or restarting a first timer for a corresponding HARQ process.

In the above embodiments, if the first timer is a time alignment timer (*timeAlignmentTimer*), a terminal equipment may start or restart the first timer in the following situations, the situations including but not limited to at least one of the following:
when a cell switch command including a TAC is received, starting or restarting a first timer associated with a PTAG,
when a cell switch command including target cell information is received, if a terminal equipment possesses a valid TA value of a target cell, starting or restarting a first timer associated with a PTAG, or
when a configuration of a target cell is applied, starting or restarting a first timer associated with a PTAG.

In the above embodiments, a cell switch command may be an LTM cell switch command MAC CE (referring to a process shown in FIG. 2), or a cell switch command may be an *RRC reconfiguration with sync* message (referring to a process shown in FIG. 4).

In the above embodiments, a target cell may be a CHO candidate cell, an RRC layer of a terminal equipment may apply a configuration of the CHO candidate cell and provide a first indication to an MAC layer, and an MAC layer starts or restarts a first timer associated with a PTAG based on the first indication.

In the above embodiments, a target cell may further be an LTM candidate cell, an RRC layer of a terminal equipment may apply a configuration of the LTM candidate cell and provide a second indication to an MAC layer, and the MAC layer starts or restarts a first timer associated with a PTAG based on the second indication.

Each of the above embodiments is only exemplary description of a method in the embodiments of the present disclosure, however the present disclosure is not limited thereto, and appropriate variations may be further made based on each of the above embodiments. For example, each of the above embodiments may be used individually, or one or more of the above embodiments may be combined.

A method in the embodiments of the present disclosure is described below in conjunction with scenarios shown in FIG. 2, FIG. 4 and FIG. 5. Contents in brackets are optional, or further explanatory, or replaceable.

By taking a scenario shown in FIG. 2 as an example, as shown in FIG. 2, a cell switch command is a cell switch command MAC CE in step 6, a target cell is one of LTM candidate cells, and a configuration of a target cell is included in an LTM candidate configuration included in an RRC reconfiguration message in step 2.

In one example, a first timer is a configured grant timer.

As shown in FIG. 2, a terminal equipment performs DL synchronization and UL synchronization with a candidate cell in step 4 (4a/4b). In step 6, a gNB decides to perform cell switch to a target cell and triggers cell switch by transmitting an MAC CE including a candidate configuration index of the target cell. A terminal equipment switches to the target cell and applies a configuration indicated by a candidate configuration index. Based on step 4b, a network device is able to include, in an MAC CE in step 6, a valid TA of a terminal equipment in the target cell. In this way, a terminal equipment may transmit the first UL data to the target cell without performing a random access procedure to the target cell, thereby completing an LTM cell switch procedure.

In the above example, transmitting the first UL data to the target cell includes that: according to beam information (and RRC signaling, such as a configured grant provided in an RRC reconfiguration message including an LTM candidate configuration in step 2 of FIG. 2) indicated in an MAC CE in step 6, a terminal equipment selects an associated configured grant occasion, considers the same valid, and performs initial transmission and retransmission of the first UL data by using these configured grants.

In the above example, performing initial transmission of the first UL data by using a configured grant includes that: for each configured grant, if it is configured and activated, a terminal equipment (e.g., an MAC entity) sets a HARQ process ID to an HARQ process ID (e.g., a second HARQ process) associated with a PUSCH duration of the configured grant; and if a CG LTM retransmission timer is configured but is not running for a corresponding HARQ process, (if the configured grant is for initial transmission during LTM cell switch, i.e., initial new transmission,) the terminal equipment delivers the configured grant and associated HARQ information to the second HARQ process.

In the above example, performing initial transmission of the first UL data by using a configured grant further includes that: for each configured grant, a terminal equipment (e.g., an HARQ entity) identifies an HARQ process associated with the configured grant, (if MAC PDUs has not been obtained and the grant is a prioritized grant,) obtains MAC PDUs from a multiplexing and assembly entity; delivers MAC PDUs, the configured grant, and HARQ information of the TB to an identified HARQ process; indicates the HARQ process to trigger one new transmission; when the transmission is ongoing, (if an LBT failure indication is not received from a lower layer,) if configured, starts or restarts a corresponding configured grant timer (i.e., a first timer) of the HARQ process; and starts or restarts a CG LTM retransmission timer.

In the above example, when the configured grant timer expires, (if a first condition is satisfied,) a terminal equipment performs at least one of the following:

### (1) Fast recovery.

When the configured grant timer expires, an MAC layer (MAC entity) indicates cell switch failure to an upper layer (optional), and
(based on the indication,) a terminal equipment (e.g., RRC) initiates an RRC connection reestablishment procedure, i.e., performs cell selection. If a selected cell is an LTM candidate cell and a network configured "try LTM after failure", the terminal equipment attempts LTM to the candidate cell once, that is, the terminal equipment applies a configuration of the LTM candidate cell (at this point, a terminal equipment performs a random access-based procedure, a problem that a first timer expires or is stopped will not occur), otherwise (i.e., at least one of the following: a selected cell is not an LTM candidate cell, or a network configured "try LTM after failure"), a terminal equipment transmits an RRC connection reestablishment request.

### (2) Random access-based cell switch.

For example (option 1):
When the configured grant timer expires, a terminal equipment (a second HARQ process) places obtained MAC PDUs (from a corresponding HARQ process buffer) into/back into a multiplexing and assembly entity; or
when the configured grant timer expires, a terminal equipment (MAC layer/MAC entity) initiates a random access procedure to the target cell.

For another example (option 2):
When the configured grant timer expires, an MAC layer (MAC entity) indicates cell switch failure to an upper layer (optional),
RRC indicates an MAC entity to perform a random access procedure to a target cell (optional), and delivers a first RRC message (e.g., an RRC reconfiguration complete message) to a lower layer, or
when the configured grant timer expires, a terminal equipment (MAC layer/MAC entity) initiates a random access procedure to the target cell.

### (3) Transmitting the first uplink data by using a dynamic grant.

For example (option 1):
When the configured grant timer expires, a terminal equipment (a second HARQ process) places obtained MAC PDUs (from a corresponding HARQ process buffer) into/back into a multiplexing and assembly entity,
(if the configured grant timer expires,) a terminal equipment (MAC layer/MAC entity) monitors a PDCCH on an active BWP of the target cell, and determines a corresponding HARQ process (first HARQ process) if an UL grant on a PDCCH addressed to an MAC entity's C-RNTI is received, and
a terminal equipment (first HARQ process) obtains MAC PDUs from a multiplexing and assembly entity.

For another example (option 2):
When the configured grant timer expires, an MAC layer (MAC entity) indicates cell switch failure to an upper layer (optional),
RRC delivers a first RRC message (e.g., an RRC reconfiguration complete message) to a lower layer,
(if the configured grant timer expires,) a terminal equipment (MAC layer/MAC entity) monitors a PDCCH on an active BWP of the target cell, and determines a corresponding HARQ process (first HARQ process) if an UL grant on a PDCCH addressed to an MAC entity's C-RNTI is received, and
a terminal equipment (first HARQ process) obtains MAC PDUs from a multiplexing and assembly entity.

### (4) Starting or restarting the configured grant timer.

When the configured grant timer expires, a terminal equipment restarts the configured grant timer, or
(if the configured grant timer expires,) a terminal equipment (MAC layer/MAC entity) monitors a PDCCH on an active BWP of a target cell; when the configured grant timer expires, if an UL grant on a PDCCH addressed to an MAC entity's CS-RNTI is received (and if a CG LTM retransmission timer, e.g., cg-LTM-RetransmissionTimer, is not configured), a terminal equipment restarts the configured grant timer; and a second HARQ process (entity) performs retransmission of the first UL data by using the UL grant.

In another example, a first timer is a time alignment timer.

As shown in FIG. 2, the terminal equipment performs DL synchronization and UL synchronization with a candidate cell in step 4 (4a/4b). In step 6, a gNB decides to perform cell switch to a target cell and triggers cell switch by transmitting an MAC CE including a candidate configuration index of the target cell. A terminal equipment switches to the target cell and applies a configuration indicated by the candidate configuration index. Based on step 4b, a network device is able to include, in an MAC CE in step 6, a valid TA of a terminal equipment in the target cell. In this way, a terminal equipment may transmit the first UL data to the target cell without performing a random access procedure to the target cell, thereby completing an LTM cell switch procedure.

In the above example, when an LTM cell switch command MAC CE including the valid TA (e.g., TAC) is received, a time alignment timer associated with a PTAG is started or restarted.

In the above example, when the time alignment timer expires, (if a first condition is satisfied,) a terminal equipment performs at least one of the following:

### (1) Fast recovery.

When the time alignment timer expires, an MAC layer (MAC entity) indicates to an upper layer that the time alignment timer expires, or cell switch failure (optional),
(based on the indication,) a terminal equipment (RRC) initiates an RRC connection reestablishment procedure, i.e., performs cell selection. If a selected cell is an LTM candidate cell and a network configured "try LTM after failure", a terminal equipment attempts LTM to the candidate cell once, that is, a terminal applies a configuration of the LTM candidate cell, otherwise (i.e., at least one of the following: a selected cell is not an LTM candidate cell, or a network configured "try LTM after failure"), a terminal equipment transmits an RRC connection reestablishment request.

### (2) Random access-based cell switch.

For example (option 1):
When the time alignment timer expires, a terminal equipment (a second HARQ process) places obtained MAC PDUs (from a corresponding HARQ process buffer) into/back into a multiplexing and assembly entity, or
when the time alignment timer expires, a terminal equipment (MAC layer/MAC entity) initiates a random access procedure to the target cell.

For another example (option 2):
When the time alignment timer expires, an MAC layer (MAC entity) indicates to an upper layer that the time alignment timer expires, or cell switch failure (optional),
RRC indicates an MAC entity to perform a random access procedure to a target cell (optional), and delivers a first RRC message (e.g., an RRC reconfiguration complete message) to a lower layer, or
when the time alignment timer expires, a terminal equipment (MAC layer/MAC entity) initiates a random access procedure to the target cell.

### (3) Starting or restarting the time alignment timer.

When the time alignment timer expires, a terminal equipment restarts the time alignment timer, and
when LTM cell switch is (successfully) completed or it is considered that the first uplink data is successfully received, a terminal equipment stops the time alignment timer or considers that the time alignment timer expires.

By taking a scenario shown in FIG. 4 as an example, as shown in FIG. 4, a cell switch command is an RRC reconfiguration message in step 6.

In one example, a first timer is a configured grant timer.

As shown in FIG. 4, before step 2 or step 6, the terminal equipment has performed DL synchronization and UL synchronization with a candidate cell. In step 6, a gNB decides to perform cell switch to a target cell and triggers cell switch by transmitting an RRC reconfiguration message including a configuration of the target cell. A terminal equipment switches to the target cell and applies the configuration. Based on previous DL/UL synchronization, a network device is able to include, in an RRC reconfiguration message in step 6, a valid TA of a terminal equipment in the target cell. In this way, a terminal equipment may transmit the first UL data to the target cell without performing a random access procedure to the target cell (i.e., "detach from old cell Synchronise to new cell" may be modified to "detach from old cell, apply target configurations"), so as to complete a cell switch procedure.

Subsequent steps are similar to a situation in which a first timer is a configured grant timer in a scenario shown in FIG. 2. Unlike a situation in which a first timer is a configured grant timer in a scenario shown in FIG. 2, "MAC CE" in the situation is replaced with an RRC reconfiguration message.

In another example, a first timer is a time alignment timer.

As shown in FIG. 4, before step 2 or step 6, the terminal equipment has performed DL synchronization and UL synchronization with a candidate cell. In step 6, a gNB decides to perform cell switch to a target cell and triggers cell switch by transmitting an RRC reconfiguration message including a configuration of the target cell. A terminal equipment switches to the target cell and applies the configuration. Based on previous DL/UL synchronization, a network device is able to include, in an RRC reconfiguration message in step 6, a valid TA of a terminal equipment in the target cell. In this way, a terminal equipment may transmit the first UL data to the target cell without performing a random access procedure to the target cell (i.e., "detach from old cell Synchronise to new cell" may be modified to "detach from old cell, apply target configurations"), so as to complete a cell switch procedure.

Subsequent steps are similar to a situation in which a first timer is a time alignment timer in a scenario shown in FIG. 2. Unlike a situation in which a first timer is a time alignment timer in a scenario shown in FIG. 2, "LTM cell switch command MAC CE" in the situation is replaced with an RRC reconfiguration message (for (L3) cell switch), and "completion of LTM cell switch" is replaced with completion of (L3) cell switch.

By taking a scenario shown in FIG. 5 as an example, as shown in FIG. 5, applying a configuration of a target cell is determining a target cell and applying a configuration thereof after a CHO condition is evaluated.

In one example, a first timer is a configured grant timer.

As shown in FIG. 5, in step 6, a gNB provides a terminal equipment with a configuration of a candidate cell and CHO evaluation conditions, and a terminal equipment performs evaluation of CHO conditions; before "detach from old cell Synchronise to new cell", the terminal equipment has performed DL synchronization and UL synchronization with a candidate cell. A terminal equipment decides to perform cell switch to one target cell and applies a configuration of the target cell. Based on previous DL/UL synchronization, a network device is able to include, in an RRC reconfiguration message in step 6, a valid TA of a terminal equipment in the target cell. In this way, a terminal equipment may transmit the first UL data to the target cell without performing a random access procedure to the target cell (i.e., "detach from old cell Synchronise to new cell" may be modified to "detach from old cell, apply target configurations"), so as to complete a cell switch procedure.

Subsequent steps are similar to a situation in which a first timer is a configured grant timer in a scenario shown in FIG. 2. Unlike a situation in which a first timer is a configured grant timer in a scenario shown in FIG. 2, "MAC CE" in the situation is replaced with an RRC reconfiguration message.

In another example, a first timer is a time alignment timer.

As shown in FIG. 5, in step 6, a gNB provides a terminal equipment with a configuration of a candidate cell and CHO evaluation conditions, and a terminal performs evaluation of CHO conditions; before "detach from old cell Synchronise to new cell", the terminal equipment has performed DL synchronization and UL synchronization with a candidate cell. A terminal equipment decides to perform cell switch to one target cell and applies a configuration of the target cell. Based on previous DL/UL synchronization, a network device is able to include, in an RRC reconfiguration message in step 6, a valid TA of a terminal equipment in the target cell. In this way, a terminal equipment may transmit the first UL data to the target cell without performing a random access procedure to the target cell (i.e., "detach from old cell Synchronise to new cell" may be modified to "detach from old cell, apply target configurations"), so as to complete a cell switch procedure.

Subsequent steps are similar to a situation in which a first timer is a time alignment timer in a scenario shown in FIG. 2. Unlike a situation in which a first timer is a time alignment timer in a scenario shown in FIG. 2, "LTM cell switch command MAC CE" in the situation is replaced with an RRC reconfiguration message (for (L3) cell switch), and "completion of LTM cell switch" is replaced with completion of (L3) cell switch.

According to a method in the embodiments of the present application, when a first timer is not running, a terminal equipment performs at least one of (1) fast recovery, (2) random access-based cell switch, (3) transmitting the first uplink data by using a dynamic grant or (4) starting or restarting the first timer, thereby a terminal equipment may continue transmitting the first uplink data and/or continue performing a cell switch procedure when a first timer is not running, thereby to ensure successful completion of LTM cell switch or completion of LTM execution, or a terminal equipment is able to perform fast recovery when a CG timer or a TA timer (TAT) is not running, thereby reducing interruption of service.

### Embodiments of a Second Aspect

Embodiments of the present disclosure provide a processing apparatus for a timer, the apparatus may e.g. be a terminal equipment, or may be one or more components or assemblies configured in a terminal equipment. A principle of the apparatus to solve problems is same as a method in the embodiments of a first aspect, thus a specific implementation thereof may refer to implementation of a method in the embodiments of the first aspect, the same contents will not be repeated.

FIG. 7 is a schematic diagram of a processing apparatus for a timer in the embodiments of the present disclosure. As shown in FIG. 7, the apparatus 700 includes:
a first processing unit 710 configured to perform at least one of the following processing when a first timer is not running:
fast recovery;
random access-based cell switch;
transmitting the first uplink data by using a dynamic grant; or
starting or restarting the first timer;
wherein the first timer is a configured grant timer or a time alignment timer.

In the embodiments of the present disclosure, that a first timer is not running refers to at least one of the following:
that a first timer is configured, and the first timer expires,
that a first timer is configured, and the first timer is stopped, or
that a first timer is not configured.

In some embodiments, that a first processing unit 710 performs fast recovery when a first timer is not running includes that: a first processing unit 710 initiates RRC connection reestablishment.

In the above embodiments, that a first processing unit 710 initiates RRC connection reestablishment may include that:
a first processing unit 710 performs cell selection,
if a first condition is satisfied, i.e., if a selected cell is a conditional handover (CHO) candidate cell and a network configured "try CHO after failure", a first processing unit 710 attempts CHO execution once, or a first processing unit 710 applies a configuration of the CHO candidate cell,
if a second condition is satisfied, i.e., if a selected cell is an L1/L2-triggered mobility (LTM) candidate cell and a network configured "try LTM after failure", a first processing unit 710 attempts LTM to the candidate cell once, or a first processing unit 710 applies a configuration of the LTM candidate cell, and
if the first condition and/or the second condition is/are not satisfied, a first processing unit 710 transmits an RRC connection reestablishment request.

In the above embodiments, that a first processing unit 710 performs fast recovery may further include that:
a first processing unit 710, at an MAC layer of a terminal equipment, indicates that a first timer expires or is stopped, or indicates cell switch failure, or indicates radio link failure, to an upper layer, or
a first processing unit 710, at an MAC layer of a terminal equipment, indicates to an upper layer to perform failure recovery, or
a first processing unit 710 considers that a cell switch timer expires.

In some embodiments, that a first processing unit 710 performs random access-based cell switch when a first timer is not running includes that:
a first processing unit 710 performs a random access procedure to a target cell at an MAC layer of a terminal equipment.

In the above embodiments, that a first processing unit 710 performs a random access procedure to a target cell at an MAC layer of a terminal equipment may include that:
a first processing unit 710 transmits a random access preamble associated with a beam by using a random access resource associated with the beam which is a beam configured by RRC, a beam indicated by a lower layer or a selected beam.

In the above embodiments, a random access procedure may be either a contention-based random access procedure or a contention-free random access procedure.

In the above embodiments, that a first processing unit 710 performs random access-based cell switch further includes at least one of the following:
that a first processing unit 710, at an MAC layer of a terminal equipment, places the first uplink data from a HARQ process buffer corresponding to the first timer into a multiplexing and assembly entity,
that a first processing unit 710, at an MAC layer of a terminal equipment, indicates that a first timer expires or is stopped, or indicates cell switch failure, or indicates execution of failure recovery, to an upper layer, or
that the first processing unit 710, at an RRC layer of a terminal equipment, indicates to an MAC layer to perform a random access procedure to a target cell and delivers a CCCH message or a first RRC message to a lower layer.

In some embodiments, that a first processing unit 710 transmits the first uplink data by using a dynamic grant when a first timer is not running includes that:
a first processing unit 710 monitors a PDCCH on an active BWP of a target cell, and
determines a corresponding HARQ process if an uplink grant on a PDCCH addressed to an MAC entity's C-RNTI is received, the HARQ process obtaining MAC PDUs from a multiplexing and assembly entity.

In the above embodiments, a first timer may be a configured grant timer, that a first processing unit 710 transmits the first uplink data by using a dynamic grant may further include that:
a first processing unit 710 places the first uplink data from a HARQ process buffer corresponding to the first timer into a multiplexing and assembly entity.

Optionally, in the above embodiments, a first timer is a configured grant timer, that a first processing unit 710 transmits the first uplink data by using a dynamic grant may further include that:
a first processing unit 710 delivers a first RRC message to a lower layer.

In the above embodiments, a first processing unit 710, at an MAC layer of a terminal equipment, may further indicate to an upper layer that a first timer expires or is stopped.

In some embodiments, a first timer is a configured grant timer, that a first processing unit 710 starts or restarts the first timer when the first timer is not running includes at least one of the following:
restarting the first timer,
monitoring a PDCCH on an active BWP of a target cell; and if an uplink grant on a PDCCH addressed to an MAC entity's CS-RNTI is received, starting or restarting the first timer, or
monitoring a PDCCH on an active BWP of a target cell; and if an uplink grant on a PDCCH addressed to an MAC entity's CS-RNTI is received, and if a CG retransmission timer is not configured, starting or restarting the first timer.

In some embodiments, a first timer is a time alignment timer, that a first processing unit 710 starts or restarts the first timer when the first timer is not running includes:
restarting the first timer.

In the above embodiments, when cell switch is completed or it is considered that the first uplink data is successfully received, a first processing unit 710 stops the first timer or considers that the first timer expires or is stopped.

In some embodiments, a first processing unit 710 performs at least one of the above processing when a first timer is not running and a third condition is satisfied, the third condition including at least one of the following:
that cell switch is ongoing,
that the first uplink data is transmitted,
that it is not yet considered that the first uplink data is successfully received,
that a downlink assignment on a PDCCH addressed to an MAC entity's C-RNTI has not yet been received, or
that an uplink grant on a PDCCH addressed to an MAC entity's C-RNTI delivered to an HARQ entity of a HARQ process corresponding to the first timer has not yet been received.

In some embodiments, as shown in FIG. 7, the apparatus 700 further includes:
a second processing unit 720 configured to start or restart the first timer.

In the above embodiments, if a first timer is a configured grant timer, that a second processing unit 720 starts or restarts the first timer may include that:
a second processing unit 720 performs at least one of the following processing:
when performing transmission, if LBT failure indication is not received from lower layers, starting or restarting the first timer for a corresponding HARQ process,
when an uplink grant has been received on a PDCCH for an MAC entity's C-RNTI, and an identified HARQ process is configured for a configured uplink grant, starting or restarting the first timer for a corresponding HARQ process, or
when an uplink grant for a PDCCH occasion has been received on a PDCCH for an MAC entity's C-RNTI, and NDI in received HARQ information is 1, starting or restarting the first timer for a corresponding HARQ process.

In the above embodiments, if a first timer is a time alignment timer, that a second processing unit 720 starts or restarts the first timer may include that:
a second processing unit 720 performs at least one of the following processing:
when a cell switch command including a TAC is received, starting or restarting the first timer associated with a PTAG corresponding to the TAC,
when a cell switch command including target cell information is received, if a terminal equipment possesses a valid TA value of a target cell, starting or restarting the first timer associated with a PTAG corresponding to the TA value, or
when a configuration of a target cell is applied, starting or restarting the first timer associated with a PTAG corresponding to the target cell.

In the above embodiments, a cell switch command may be an LTM cell switch command MAC CE, or may be an "RRC reconfiguration with sync" message.

In the above embodiments, a target cell may be a CHO candidate cell, a second processing unit 720 may apply a configuration of the CHO candidate cell at an RRC layer of a terminal equipment, and provide a first indication to an MAC layer, and an MAC layer starts or restarts a first timer associated with the PTAG based on the first indication.

In the above embodiments, a target cell may further be an LTM candidate cell, a second processing unit 720 applies a configuration of the LTM candidate cell at an RRC layer of a terminal equipment, and provides a second indication to an MAC layer, and an MAC layer starts or restarts a first timer associated with the PTAG based on the second indication.

The above text provides an exemplary description of the embodiments of the present disclosure, but the present disclosure is not limited thereto, appropriate variations may be also made based on each of the above embodiments. For example, each of the above embodiments may be used individually, or one or more of the above embodiments may be combined.

It's worth noting that the above text only describes components or modules related to the present disclosure, but the present disclosure is not limited thereto. The apparatus may further include other components or modules. For detailed contents of these components or modules, relevant technologies may be referred to. Moreover, each of the above components or modules may be implemented via a hardware facility such as a processor, a memory, a transmitter, a receiver, etc. The embodiments of the present disclosure have no limitation thereto.

According to an apparatus in the embodiments of the present disclosure, a terminal equipment may continue transmitting the first uplink data and/or continue performing a cell switch procedure when a first timer is not running, thereby to ensure successful completion of LTM cell switch or LTM execution, or a terminal equipment is able to perform fast recovery when a CG timer or a TA timer (TAT) is not running, thereby reducing interruption of service.

### Embodiments of a Third Aspect

Embodiments of the present disclosure further provide a communication system, including a network device and a terminal equipment.

FIG. 8 is a schematic diagram of a communication system in the embodiments of the present disclosure, and schematically describes a situation by taking a terminal equipment and a network device as an example, as shown in FIG. 8, a communication system 800 may include a network device 801 and terminal equipments 802, 803. For simplicity, FIG. 8 only takes two terminal equipments and one network device as an example for description, however the embodiments of the present disclosure are not limited thereto.

In the embodiments of the present disclosure, transmission of existing or future implementable services may be carried out between a network device 801 and the terminal equipments 802, 803. For example, these services may include but be not limited to: enhanced Mobile Broadband (eMBB), massive Machine Type Communication (mMTC), Ultra-Reliable and Low-Latency Communication (URLLC) and so on.

It is worth noting that FIG. 8 shows that two terminal equipments 802 and 803 are all within a coverage range of a network device 801, but the present disclosure is not limited thereto. Two terminal equipments 802 and 803 may be all not within a coverage range of a network device 801, or one terminal equipment 802 is within a coverage range of a network device 801 while the other terminal equipment 803 is outside a coverage range of a network device 801.

In some embodiments, a terminal equipment includes an apparatus 700 described in the embodiments of a second aspect, configured to perform a method described in the embodiments of the first aspect. Since the method has been described in details in the embodiments of a first aspect, contents thereof are incorporated here and are not repeated.

Embodiments of the present disclosure further provide a terminal equipment, the terminal equipment for example may be a UE, but the present disclosure is not limited thereto, the terminal equipment may further be other terminal equipment.

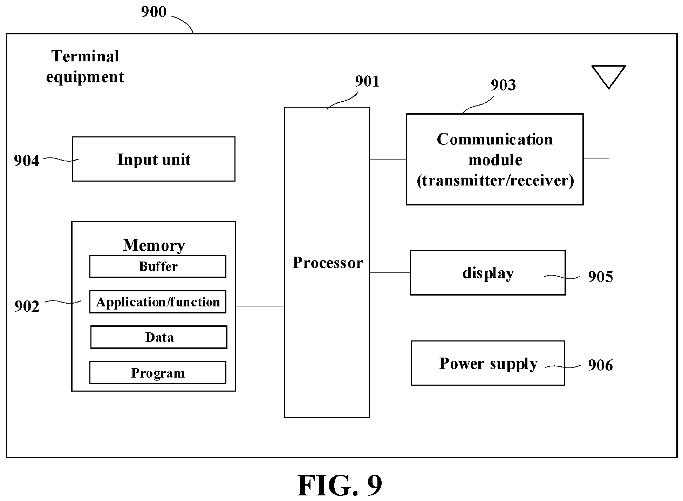

FIG. 9 is a schematic diagram of a terminal equipment in the embodiments of the present disclosure. As shown in FIG. 9, the terminal equipment 900 may include a processor 901, and a memory 902 storing data and programs and coupled to a processor 901. It's worth noting that this figure is exemplary, other types of structures may further be used to supplement or replace this structure, so as to implement a telecommunication function or other functions.

In some embodiments, functions of an apparatus 700 in the embodiments of a second aspect may be integrated into a processor 901, wherein a processor 901 may be configured to execute a program to implement a method described in the embodiments of a first aspect, contents thereof are incorporated here and are not described repeatedly here.

In some other embodiments, an apparatus 700 in the embodiments of a second aspect may be configured separately from a processor 901, for example an apparatus 700 in the embodiments of a second aspect may be configured as a chip connected to a processor 901, functions of an apparatus 700 in the embodiments of a second aspect are implemented through control of a processor 901.

As shown in FIG. 9, the terminal equipment 900 may further include: a communication module 903, an input unit 904, a display 905, and a power supply 906. Functions of the above components are similar to related arts, and are not further elaborated here. It's worth noting that a terminal equipment 900 does not have to include all components shown in FIG. 9, the above components are not indispensable. Moreover, a terminal equipment 900 may further include components not shown in FIG. 9, and relevant technologies may be referred to.

Embodiments of the present disclosure further provide a computer program, wherein when a terminal equipment executes the program, the program enables the terminal equipment to execute a method described in the embodiments of a first aspect.

Embodiments of the present disclosure further provide a storage medium in which a computer program is stored, wherein the computer program enables a terminal equipment to execute a method described in the embodiments of a first aspect.

Apparatuses and methods in the present disclosure may be implemented by hardware, or may be implemented by combining hardware with software. The present disclosure relates to such a computer readable program, when the program is executed by a logic component, the logic component is able to implement the apparatuses described in the above text or a constituent component, or the logic component is able to implement various methods or steps described in the above text. The present disclosure further relates to a storage medium storing the program, such as a hard disk, a magnetic disk, an optical disk, a DVD, a flash memory and the like.

By combining with methods/apparatuses described in the embodiments of the present disclosure, it may be directly embodied as hardware, a software module executed by a processor, or a combination of the two. For example, one or more of functional block diagrams as shown in the drawings or one or more combinations of functional block diagrams may correspond to software modules of a computer program flow, or may correspond to hardware modules. These software modules may respectively correspond to steps shown in the drawings. These hardware modules may be implemented by solidifying these software modules e.g. using a field-programmable gate array (FPGA).

A software module may be located in a RAM memory, a flash memory, a ROM memory, an EPROM memory, an EEPROM memory, a register, a hard disk, a mobile magnetic disk, a CD-ROM or a storage medium in any other form as known in the art. A storage medium may be coupled to a processor, thus enabling a processor to read information from the storage medium, and write information into the storage medium, or the storage medium may be a constituent part of a processor. A processor and a storage medium may be located in an ASIC. The software module may be stored in a memory of a mobile terminal, or may be stored in a memory card of an insertable mobile terminal. For example, if a device (e.g., a mobile terminal) adopts a MEGA-SIM card with a larger capacity or a flash memory apparatus with a large capacity, the software module may be stored in the MEGA-SIM card, or the flash memory apparatus with a large capacity.

One or more of functional block diagrams described in the drawings or one or more combinations of functional block diagrams may be implemented as a general-purpose processor for performing functions described in the present disclosure, a digital signal processor (DSP), an application-specific integrated circuit (ASIC), a field-programmable gate array (FPGA) or other programmable logic device, a discrete gate or a transistor logic device, a discrete hardware component, or any appropriate combination thereof. One or more of functional block diagrams described in the drawings or one or more combinations of functional block diagrams may further be implemented as a combination of computing devices, such as a combination of a DSP and a microprocessor, a plurality of microprocessors, one or more microprocessors combined and communicating with a DSP, or any other such configuration.

The present disclosure is described by combining with specific implementations, however persons skilled in the art should clearly know that these descriptions are exemplary and do not limit a protection scope of the present disclosure. Persons skilled in the art may make various variations and amendments to the present disclosure according to a spirit and principle of the present disclosure, these variations and amendments are also within a scope of the present disclosure.

As for implementations including the above embodiments, the following supplements are further disclosed:
1. A processing method for a timer, wherein the method includes that:
   a terminal equipment performs at least one of the following processing when a first timer is not running:
   fast recovery;
   random access-based cell switch;
   transmitting the first uplink data by using a dynamic grant; or
   starting or restarting the first timer;
   wherein the first timer is a configured grant timer or a time alignment timer.
2. The method according to supplement 1, wherein that the terminal equipment performs fast recovery includes that:
   the terminal equipment initiates RRC connection reestablishment.
3. The method according to supplement 2, wherein that the terminal equipment performs fast recovery further includes that:
   an MAC layer of the terminal equipment indicates that a first timer expires or is stopped, or indicates cell switch failure, or indicates radio link failure, to an upper layer, or
   an MAC layer of the terminal equipment indicates to an upper layer to perform failure recovery, or
   the terminal equipment considers that a cell switch timer expires.
4. The method according to supplement 1, wherein that the terminal equipment performs random access-based cell switch includes that:
   an MAC layer of the terminal equipment performs a random access procedure to a target cell.
5. The method according to supplement 4, wherein that an MAC layer of the terminal equipment performs a random access procedure to a target cell includes that:
   the terminal equipment transmits a random access preamble associated with a beam by using a random access resource associated with the beam which is a beam configured by RRC, a beam indicated by a lower layer or a selected beam.
6. The method according to supplement 4 or 5, wherein,
   the random access procedure is a contention-based random access procedure, or the random access procedure is a contention-free random access procedure.
7. The method according to any one of supplements 1 to 6, wherein the method further includes that:
   the terminal equipment starts or restarts the first timer.
8. The method according to supplement 7, wherein the first timer is a time alignment timer, that the terminal equipment starts or restarts the first timer includes at least one of the following:
   when a cell switch command including a TAC is received, starting or restarting the first timer associated with a PTAG corresponding to the TAC,
   when a cell switch command including target cell information is received, if a terminal equipment possesses a valid TA value of a target cell, starting or restarting the first timer associated with a PTAG corresponding to the TA value, or
   when a configuration of a target cell is applied, starting or restarting the first timer associated with a PTAG corresponding to the target cell.
9. The method according to supplement 8, wherein,
   the target cell is a CHO candidate cell, an RRC layer of the terminal equipment applies a configuration of the CHO candidate cell and provide a first indication to an MAC layer, and the MAC layer starts or restarts the first timer associated with the PTAG based on the first indication.
10. The method according to supplement 8, wherein,
   the target cell is an LTM candidate cell, an RRC layer of the terminal equipment applies a configuration of the LTM candidate cell and provide a second indication to an MAC layer, and the MAC layer starts or restarts the first timer associated with the PTAG based on the second indication.

## Claims

1. A processing apparatus for a timer, configured in a terminal equipment, wherein the apparatus comprises:
a first processing unit configured to perform at least one of the following processing when a first timer is not running:
fast recovery;
random access-based cell switch;
transmitting the first uplink data by using a dynamic grant; or
starting or restarting the first timer;
wherein the first timer is a configured grant timer or a time alignment timer.

2. The apparatus according to claim 1, wherein that the first timer is not running refers to at least one of the following:
that the first timer is configured, and the first timer expires,
that the first timer is configured, and the first timer is stopped, or
that the first timer is not configured.

3. The apparatus according to claim 1, wherein that the first processing unit performs fast recovery comprises that:
the first processing unit initiates RRC connection reestablishment.

4. The apparatus according to claim 3, wherein that the first processing unit initiates RRC connection reestablishment comprises that:
the first processing unit performs cell selection,
if a first condition is satisfied, i.e., if a selected cell is a conditional handover (CHO) candidate cell and a network configures "try CHO after failure", the first processing unit attempts CHO execution once, or the first processing unit applies a configuration of the CHO candidate cell,
if a second condition is satisfied, i.e., if a selected cell is an L1/L2-triggered mobility (LTM) candidate cell and a network configures "try LTM after failure", the first processing unit attempts LTM to the candidate cell once, or the first processing unit applies a configuration of the LTM candidate cell, and
if the first condition and/or the second condition is/are not satisfied, the first processing unit transmits an RRC connection reestablishment request.

5. The apparatus according to claim 1, wherein that the first processing unit performs random access-based cell switch comprises that:
the first processing unit performs a random access procedure to a target cell at an MAC layer of the terminal equipment.

6. The apparatus according to claim 5, wherein that the first processing unit performs random access-based cell switch further comprises at least one of the following:
that the first processing unit, at an MAC layer of the terminal equipment, places the first uplink data from a HARQ process buffer corresponding to the first timer into a multiplexing and assembly entity,
that the first processing unit, at an MAC layer of the terminal equipment, indicates that a first timer expires or is stopped, or indicates cell switch failure, or indicates execution of failure recovery, to an upper layer, or
that the first processing unit, at an RRC layer of the terminal equipment, indicates to an MAC layer to perform a random access procedure to a target cell and delivers a CCCH message or a first RRC message to a lower layer.

7. The apparatus according to claim 1, wherein that the first processing unit transmits the first uplink data by using a dynamic grant comprises that:
the first processing unit monitors a PDCCH on an active BWP of a target cell, and
determines a corresponding HARQ process if an uplink grant on a PDCCH addressed to an MAC entity's C-RNTI is received, the HARQ process obtaining MAC PDUs from a multiplexing and assembly entity.

8. The apparatus according to claim 7, wherein the first timer is a configured grant timer, that the first processing unit transmits the first uplink data by using a dynamic grant further comprises that:
the first processing unit places the first uplink data from a HARQ process buffer corresponding to the first timer into a multiplexing and assembly entity.

9. The apparatus according to claim 7, wherein the first timer is a configured grant timer, that the first processing unit transmits the first uplink data by using a dynamic grant further comprises that:
the first processing unit delivers a first RRC message to a lower layer.

10. The apparatus according to claim 9, wherein,
the first processing unit, at an MAC layer of the terminal equipment, further indicates to an upper layer that a first timer expires or is stopped.

11. The apparatus according to claim 1, wherein the first timer is a configured grant timer, that the first processing unit starts or restarts the first timer comprises at least one of the following:
restarting the first timer,
monitoring a PDCCH on an active BWP of a target cell; and if an uplink grant on a PDCCH addressed to an MAC entity's CS-RNTI is received, starting or restarting the first timer, or
monitoring a PDCCH on an active BWP of a target cell; and if an uplink grant on a PDCCH addressed to an MAC entity's CS-RNTI is received, and if a CG retransmission timer is not configured, starting or restarting the first timer.

12. The apparatus according to claim 1, wherein the first timer is a time alignment timer, that the first processing unit starts or restarts the first timer comprises that:
the first processing unit restarts the first timer.

13. The apparatus according to claim 12, wherein,
when cell switch is completed or it is considered that the first uplink data is successfully received, the first processing unit stops the first timer or considers that the first timer expires or is stopped.

14. The apparatus according to claim 1, wherein,
the first processing unit performs at least one of the above processing when the first timer is not running and a third condition is satisfied,
the third condition comprises at least one of the following:
that cell switch is ongoing,
that the first uplink data is transmitted,
that it is not yet considered that the first uplink data is successfully received,
that a downlink assignment on a PDCCH addressed to an MAC entity's C-RNTI has not yet been received, or
that an uplink grant on a PDCCH addressed to an MAC entity's C-RNTI delivered to an HARQ entity of a HARQ process corresponding to the first timer has not yet been received.

15. The apparatus according to claim 1, wherein the apparatus further comprises:
a second processing unit configured to start or restart the first timer.

16. The apparatus according to claim 15, wherein the first timer is a configured grant timer, that the second processing unit starts or restarts the first timer comprises at least one of the following:
when performing transmission, if LBT failure indication is not received from lower layers, starting or restarting the first timer for a corresponding HARQ process,
when an uplink grant has been received on a PDCCH for an MAC entity's C-RNTI, and an identified HARQ process is configured for a configured uplink grant, starting or restarting the first timer for a corresponding HARQ process, or
when an uplink grant for a PDCCH occasion has been received on a PDCCH for an MAC entity's CS-RNTI, and NDI in received HARQ information is 1, starting or restarting the first timer for a corresponding HARQ process.

17. The apparatus according to claim 15, wherein the first timer is a time alignment timer, that the second processing unit starts or restarts the first timer comprises at least one of the following:
when a cell switch command comprising a TAC is received, starting or restarting the first timer associated with a PTAG corresponding to the TAC,
when a cell switch command comprising target cell information is received, if a terminal equipment has a valid TA value of a target cell, starting or restarting the first timer associated with a PTAG corresponding to the valid TA value, or
when a configuration of a target cell is applied, starting or restarting the first timer associated with a PTAG corresponding to the target cell.

18. The apparatus according to claim 17, wherein,
the cell switch command is an LTM cell switch command MAC CE, or,
the cell switch command is an RRC reconfiguration with sync message.

19. A terminal equipment, **characterized in that** the terminal equipment comprises a memory configured to store a computer program and a processor configured to execute the computer program to implement the following method:
performing at least one of the following processing when a first timer is not running:
fast recovery;
random access-based cell switch;
transmitting the first uplink data by using a dynamic grant; or
starting or restarting the first timer;
wherein the first timer is a configured grant timer or a time alignment timer.

20. A communication system, **characterized in that** the communication system comprises a network device, and a terminal equipment according to claim 19.
